# EUROPEAN PATENT APPLICATION

(11) **EP 4 686 187 A1**
(43) Date of publication of application: **28.01.2026**
(21) Application number: 25188692.5
(22) Date of filing: 10.07.2025
(51) Int. Cl.: H04N 1/00, B41J 2/21, B41J 29/393

(54) **IMAGE READING DEVICE AND IMAGE FORMING SYSTEM**

(30) Priority: 23.07.2024 JP 2024117453
(71) Applicant: KYOCERA Document Solutions Inc., Osaka-shi, Osaka 540-8585 (JP)
(72) Inventor: FUKUNAGA, Yasuyuki, Osaka-shi, 540-8585 (JP)
(74) Representative: Kurig, Thomas

(57) **Abstract**

An image reading device (59) reads an image on a sheet conveyed along a conveyance path (49). The image reding device (59) includes a reading sensor (91), a lifting device (83), and a conveyance guide (85). The reading sensor (91) optically reads the image. The lifting device (83) lifts and lowers the reading sensor (91) to a reading height which is close to the conveyance path (49) and at which the image can be read and a non-reading height which is separated from the conveyance path (49) more upwardly than the reading height. The conveyance guide (85) is disposed above the conveyance path (49) and guides the sheet to an image reading position by the reading sensor (91). The conveyance guide (85) is pushed down by the reading sensor (91) lowered to the reading height, and is displaced from a retracted posture separated upward from the conveyance path (49) with a predetermined interval to a guiding posture closer to the conveyance path (49) than the retracted posture.

## Description

### TECHNICAL FIELD

The present disclosure relates to an image reading device which reads test image and an image forming system including the image reading device.

### BACKGROUND

In an image forming system including an inkjet type image forming apparatus, image quality is affected by a state of a recording head and ink. For example, when a nozzle surface of a recording head is dried, the ink thickens to cause ejection failure, or the ink lands at a position deviated from a desired position to cause white stripes in the image.

In order to prevent such image defects and maintain image quality, the image forming system is provided with an image reading device for reading and inspecting an image of on a sheet such as a test chart. The defective nozzle of the recording head is specified on the basis of the image read by the image reading device, and the image is corrected. Such an image inspection is performed, for example, at a frequency of about once every several thousand images.

As disclosed in JP2018-111582, the image reading device includes a reading sensor such as a CIS (Contact Image Sensor) for reading an image. The CIS is arranged so that its image reading surface faces the sheet conveyed along a conveyance path. The image reading surface is usually covered with a transparent glass plate.

When the CIS is used in this manner, a distance between the image reading surface (glass plate) of the CIS and the conveyance surface on which the sheet is conveyed is very close to each other in consideration of the depth of field and the like. Although the sheet is conveyed in a state of being in close contact with the conveyance surface of the conveyance path, if the leading edge of the sheet curls or floats up from the conveyance surface, the leading edge of the sheet may get caught in the CIS, resulting in conveyance failure of the sheet.

Therefore, a conveyance guide for guiding the leading edge of the sheet to the image reading surface of the CIS may be provided. As described above, since the image reading surface of the CIS is very close to the conveying surface, it is necessary to arrange the conveyance guide at a position close to the conveyance surface. Then, when the image reading device is attached or detached, the conveyance guide may come into contact with the conveyance surface, and the conveyance surface may be damaged or the conveyance guide may be deformed. For this reason, it is necessary to attach or detach the image reading device such that the conveyance guide does not come into contact with the conveyance surface, and the attaching and detaching ability of the image reading device is lowered.

### SUMMARY

An image reading device according to the present disclosure reads an image on a sheet conveyed along a conveyance path. The image reding device includes a reading sensor, a lifting device, and a conveyance guide. The reading sensor optically reads the image. The lifting device lifts and lowers the reading sensor to a reading height which is close to the conveyance path and at which the image can be read and a non-reading height which is separated from the conveyance path more upwardly than the reading height. The conveyance guide is disposed above the conveyance path and guides the sheet to an image reading position by the reading sensor. The conveyance guide is pushed down by the reading sensor lowered to the reading height, and is displaced from a retracted posture separated upward from the conveyance path with a predetermined interval to a guiding posture closer to the conveyance path than the retracted posture.

An image forming system according to the present disclosure includes an image forming apparatus which forms an image on a sheet, and the image reading device which reads the image formed by the image forming apparatus.

### BRIEF DESCRIPTION OF THE DRAWINGS

FIG. 1 is a perspective view schematically showing an image forming system according to one embodiment of the present disclosure.
FIG. 2 is a front view schematically showing internal structures of a sheet feeding apparatus, an image forming apparatus, and a drying apparatus of the image forming system according to the embodiment of the present disclosure.
FIG. 3 is a front view schematically showing an internal structure of an image reading device (in a state in which a CIS unit is lifted to a non-reading height) according to the embodiment of the present disclosure.
FIG. 4 is a front view schematically showing the internal structure of the image reading device (in a state in which the CIS unit is lowered to a reading height) according to the embodiment of the present disclosure.
FIG. 5 is a perspective view showing a conveyance guide of the image reading device according to the embodiment of the present disclosure.

### DITAILED DESCRIPTION

Hereinafter, with reference to the drawings, an image forming system and an image reading device according to one embodiment of the present disclosure will be described.

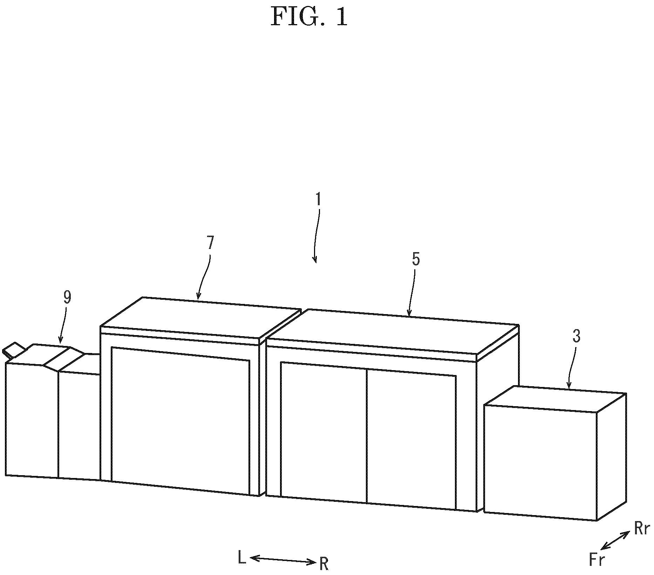

First, an image forming system will be described with reference to FIG. 1. FIG. 1 is a perspective view showing the image forming system. L, R, Fr, and Rr appropriately attached to each figure indicate the left side, right side, front side, and rear side of the image forming system, respectively.

The image forming system 1 includes a sheet feeding apparatus 3, an image forming apparatus 5, a drying apparatus 7, and a post-processing apparatus 9. The sheet feeding apparatus 3 stores the sheet and feeds the sheet to the image forming apparatus 5. The image forming apparatus 5 is disposed on the left side of the sheet feeding apparatus 3, and forms an image on the sheet fed from the sheet feeding apparatus 3, by an inkjet system based on image data input from an external computer, for example. The drying apparatus 7 is disposed on the left side of the image forming apparatus 5, and dries the image formed on the sheet while conveying it. The post-processing apparatus 9 is disposed on the left side of the drying apparatus 7 and performs post-processing on the sheet dried by the drying apparatus 7.

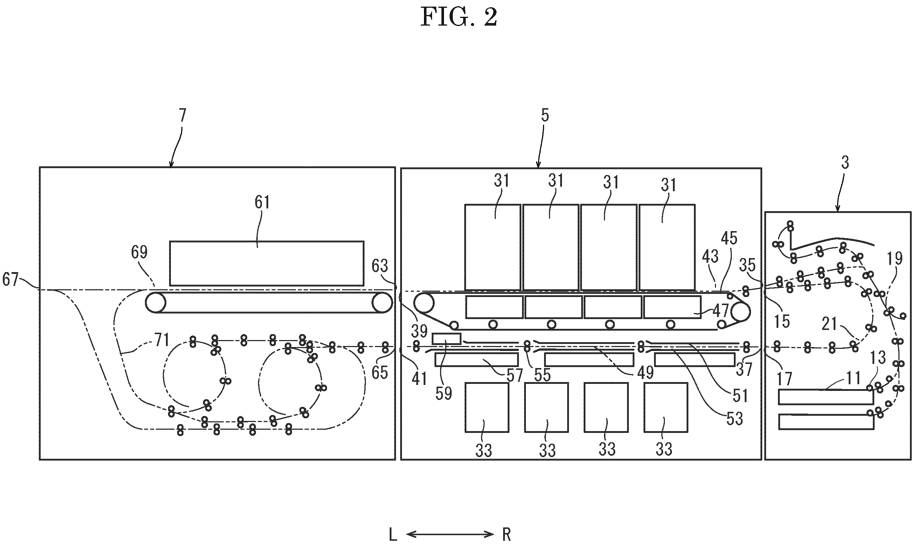

Next, the sheet feeding apparatus 3, the image forming apparatus 5, and the drying apparatus 7 will be described with reference to FIG. 2. FIG. 2 is a front view schematically showing the internal structure of the image forming system 1.

First, the sheet feeding apparatus 3 will be described. The sheet feeding apparatus 3 includes two sheet feeding cassettes 11 which store the sheets and two sheet feeding units 13 which feed the sheet from the respective sheet feeding cassettes 11. A discharge port 15 and a reception port 17 are formed on the left side surface of the sheet feeding apparatus 3. The discharge port 15 is located at the upper portion of the left side surface, and the reception port 17 is located below the discharge port 15. Between the two sheet feeding units 13 and the discharge port 15, a conveyance path 19 along which the sheet is conveyed from the two sheet feeding cassettes 11 toward the image forming apparatus 5 is formed. A double-sided conveyance path 21 along which the sheet is conveyed at double-sided printing is formed between the reception port 17 and the discharge port 15.

Next, the image forming apparatus 5 will be described. The image forming apparatus 5 includes four head units 31 and four ink containers 33. The four head units 31 correspond to the inks of four colors of black, cyan, magenta, and yellow, and are arranged along the conveyance direction (the left-and-right direction) of the sheet. Each head unit 31 has a plurality of (in one example, three) recording heads (not shown). Each recording head includes a large number of ink ejection nozzles. Each ink ejection nozzle ejects the ink downward. The four ink containers 33 contains the black, cyan, magenta, and yellow inks, and are connected to the corresponding head units 31.

A right reception port 35 and a right discharge port 37 are formed on the right side surface of the image forming apparatus 5. The right reception port 35 is disposed so as to face the discharge port 15 of the sheet feeding apparatus 3. The right discharge port 37 is disposed so as to face the reception port 17 of the sheet feeding apparatus 3. In addition, a left discharge port 39 and a left reception port 41 are formed on the left side surface of the image forming apparatus 5. The left discharge port 39 is located at the upper portion of the left side surface, and the left reception port 41 is located at the lower portion of the left side surface.

A main conveyance path 43 is formed below the four head units 31 between the right reception port 35 and the left discharge port 39. When an image is formed by the four head units 31, the sheet is conveyed along the main conveyance path 43 in the conveyance direction from the right reception port 35 to the left discharge port 39. The main conveyance path 43 is formed of an endless conveying belt 45 having a large number of fine through-holes penetrating in the thickness direction. The conveying belt 45 is wound around a drive roller and a driven roller which are spaced apart in the left-and-right direction, and a plurality of tension rollers. The rotation of the drive roller causes the conveying belt 45 to travel in the counterclockwise direction of FIG. 2. The upper surface of the conveying belt 45 traveling along the upper travel track forms the conveyance surface of the main conveyance path 43. A plurality of suction devices 47 are disposed in the space surrounded by the conveying belt 45. The suction device 47 generates negative pressure in the through-holes of the conveying belt 45 traveled along the upper travel track to attract the conveyed sheet to the conveying belt 45.

Further, a double-sided conveyance path 49 is formed below the main conveyance path 43 between the left reception port 41 and the right discharge port 37. At the time of double-sided printing or image inspection, the sheet is conveyed along the conveyance direction from the left reception port 41 to the right discharge port 37. The double-sided conveyance path 49 includes upper and lower guide plates 51 and 53 facing each other with a predetermined interval in the upper-and-lower direction, and a pair of conveyance rollers 55 arranged with a predetermined interval in the conveyance direction. The lower guide plate 53 has a number of through-holes penetrating in the thickness direction. A suction device 57 is disposed below the lower guide plate 53. The suction device 57 generates negative pressure in the through-holes of the lower guide plate 53 to attract the conveyed sheet to the lower guide plate 53.

An image reading device 59 which reads an image of a test chart during the image inspection is provided inside the left reception port 41 and above the double-sided conveyance path 49. The image reading device 59 will be described later.

Next, the drying apparatus 7 will be described. The drying apparatus 7 includes a dryer 61. The dryer 61 is provided with a plurality of fans and a heater. Air taken in by the fans is heated by the heater, and the heated air is blown downward.

A right reception port 63 and a right discharge port 65 are formed on the right side surface of the drying apparatus 7. The right reception port 63 is disposed so as to face the left discharge port 39 of the image forming apparatus 5. The right discharge port 65 is disposed so as to face the left reception port 41 of the image forming apparatus 5. Further, a left discharge port 67 is formed on the upper portion of the left side surface of the drying apparatus 7.

Between the right reception port 63 and the left discharge port 67, a main conveyance path 69 is formed below the dryer 61, along which the sheet is conveyed along the conveyance direction from the right reception port 63 to the left discharge port 67. The main conveyance path 69 branches to an inversion path 71 on the downstream side of the dryer 61 in the conveyance direction. The inversion path 71 is connected to the right discharge port 65 via two reverse paths.

Next, an image forming operation of the image forming system 1 will be briefly described. The sheet discharged through the discharge port 15 of the sheet feeding apparatus 3 is received by the image forming apparatus 5 through the right reception port 35 of the image forming apparatus 5, and conveyed along the main conveyance path 43. The sheet is conveyed while being attracted to the conveying belt 45. At this time, the four color inks are ejected from the four head units 31 in accordance with image data to form an image on the sheet. The sheet on which the image is formed is discharged through the left discharge port 39, received by the drying apparatus 7 through the right reception port 63 of the drying apparatus 7, and conveyed along the main conveyance path 69. At this time, the image formed on the sheet is dried by the dryer 61.

In the case of single-sided printing, the sheet is discharged through the left discharge port 67 to the post-processing apparatus 9. In the post-processing apparatus 9, the sheet is subjected to predetermined post-processing. In the case of double-sided printing, the sheet is conveyed from the main conveyance path 69 to the inversion path 71, and then conveyed along the two reverse paths alternately. The sheet is received by the image forming apparatus 5 from the drying apparatus 7 through the right discharge port 65 and the left reception port 41 with the printed surface facing upward after being inverted by the reverse path. The sheet is conveyed along the double-sided conveyance path 49 of the image forming apparatus 5, and received by the sheet feeding apparatus 3 from the image forming apparatus 5 through the right discharge port 37 and the reception port 17. The sheet is conveyed along the conveyance path 19 from the reception port 17 toward the discharge port 15, and is received by the image forming apparatus 5 from the sheet feeding apparatus 3 through the discharge port 15 and the right reception port 35. Thereafter, an image is formed on the rear side surface of the sheet as described above.

If the nozzle surface of the recording head of each head unit 31 of the image forming apparatus 5 dries during the image forming operation, the ink may increase in viscosity and cause ejection failure, or the ink may land at a position deviated from a desired position. Therefore, as described above, the image inspection is performed using the image reading device 59 at a frequency of about once every several thousand images.

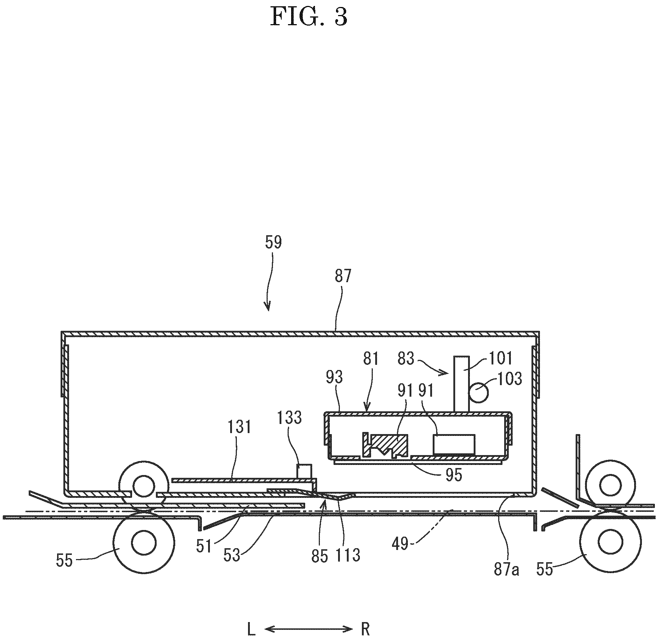

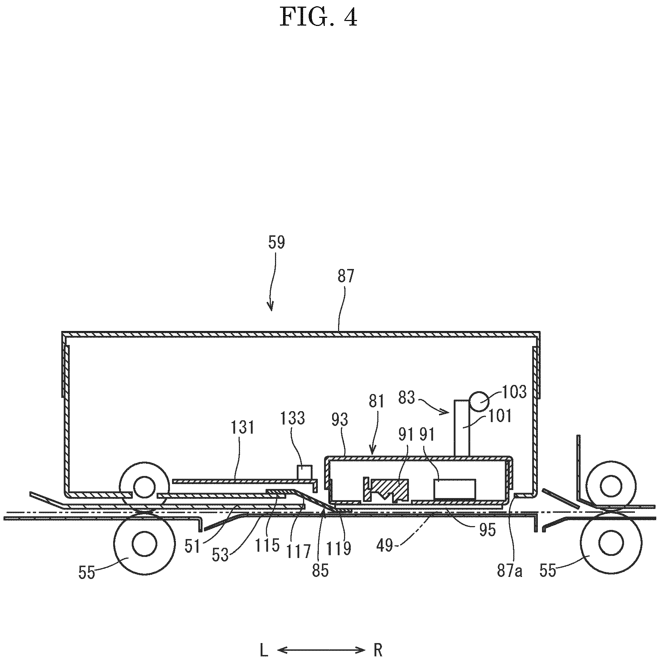

Next, the image reading device 59 will be described with reference to FIG. 3 and FIG. 4. FIG. 3 and FIG. 4 are cross-sectional views schematically showing the image reading device 59.

As shown in FIG. 3 and FIG. 4, the image reading device 59 includes a CIS unit 81, a lifting device 83 which lifts and lowers the CIS unit 81 relative to the double-sided conveyance path 49, a conveyance guide 85, and a casing 87 which supports them. The image reading device 59 is detachably attached to the image forming apparatus 5. As an example, the image reading device 59 is attached to and detached from the image forming apparatus 5 along a direction (width direction, front-and-rear direction) intersecting the conveyance direction.

First, the casing 87 will be described. The casing 87 is a substantially rectangular parallelepiped hollow member. A rectangular opening 87a is formed in the bottom plate of the casing 87. When the image reading device 59 is attached to the image forming apparatus 5, the casing 87 is disposed above the double-sided conveyance path 49. At this time, a predetermined interval (in one example, more than 2 mm) is formed between the lower surface of the bottom plate of the casing 87 and the conveyance surface of the double-sided conveyance path 49 (the upper surface of the lower guide plate 53) so as not to interfere with the sheet conveyed along the double-sided conveyance path 49.

Next, the CIS unit 81 will be described. The CIS unit 81 includes two CISs (Contact Image Sensors) 91 corresponding to an A4 size and a housing 93 which houses the two CISs 91. The two CISs 91 are arranged so as to be shifted in the width direction with the reading surface facing downward and whose longitudinal direction along the width direction (the front-and-rear direction). With this arrangement, the readable width of the reading surface is 350±0.5 mm, and it is possible to read a sheet (such as a test chart) having the maximum width (330.2 mm, 13 in). The CIS 91 is an example of the reading sensor in the present disclosure. The detection result of the CIS 91 is output to an image inspection apparatus (not shown).

The lower surface of the housing 93 (the surface facing the double-sided conveyance path 49) is made of a transparent glass plate 95. That is, the reading surface of the CIS 91 is covered with the glass plate 95.

Next, the lifting device 83 will be described. The lifting device 83 is a rack and pinion including a rack 101 provided on the housing 93 of the CIS unit 81 extending along the upper-and-lower direction and a pinion 103 supported by the casing 87 and engaged with the rack 101. The pinion 103 is connected to a motor (not shown), and is driven by the motor to be rotated. By rotating the pinion 103, the CIS unit 81 moves upward and downward with respect to the casing 87 together with the rack 101.

The lifting device 83 lifts and lowers the CIS unit 81 to a reading height and a non-reading height. The reading height is set such that the two CISs 91 can properly read the image on the sheet conveyed along the double-sided conveyance path 49. The CIS unit 81 is lowered to the reading height through the opening 87a of the bottom plate of the casing 87. In this case, a distance between the reading surface of the CIS unit 81 (the lower surface of the glass plate 95) and the double-sided conveyance path 49 (the upper surface of the lower guide plate 53) is 1 to 2 mm in one example. The non-reading height is a predetermined height higher than the reading height in the casing 87. A sensor (not shown) for detecting the height of the CIS unit 81 is provided in the casing 87. The pinion 103 is rotated based on the detection result of the sensor to lift or lower the rack 101, that is, the CIS unit 81, to a suitable height including the reading height and the non-reading height.

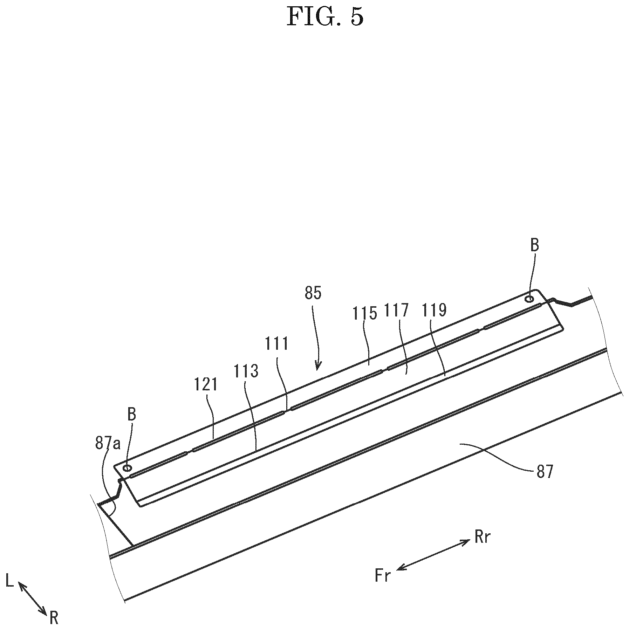

Next, the conveyance guide 85 will be described with reference to FIG. 5. FIG. 5 is a perspective view showing the conveyance guide 85. The conveyance guide 85 guides the sheet to the reading position of the CIS unit 81 lowered to the reading height. The conveyance guide 85 is a plate spring-like member having a width equal to the width of the opening 87a formed in the bottom plate of the casing 87 and a predetermined length in the conveyance direction.

The conveyance guide 85 is divided into a fixed part 115, an intermediate part 117, and a distal part 119 in order from the upstream side in the conveyance direction by a first fold 111 and a second fold 113 which extend along the width direction. The intermediate part 117 has the longest length in the conveyance direction, and the distal part 119 has the shortest length. The intermediate part 117 is bent slightly downward with respect to the fixed part 115 via the first fold 111. The distal part 119 is bent slightly upward with respect to the intermediate part 117 via the second fold 113. Slits 121 are formed on the first fold 111 at predetermined intervals along the width direction.

As shown in FIG. 5, the fixed part 115 of the conveyance guide 85 is fixed to the upper surface of the bottom plate of the casing 87 on the upstream side of the opening 87a in the conveyance direction with screws B. The intermediate part 117 and the distal part 119 of the conveyance guide 85 protrude into the opening 87a (a retracted posture). Since the intermediate part 117 and the distal part 119 are bent as described above, the second fold 113 between the two parts protrudes downmost from the opening 87a. An amount of protrusion of the second fold 113 downward is smaller than the maximum amount of protrusion of other components (such as the screws and the frames) of the image reading device 59.

The distal part 119 of the conveyance guide 85 protruded into the opening 87a and the CIS unit 81 overlap in the upper-and-lower direction.

The casing 87 houses, as described above, the sensor for detecting the height of the CIS unit 81, a correction plate 131 for correcting shading of the CIS 91, a cleaning member 133 for cleaning the glass plate 95, and a moving device for moving them. These are not explained.

An image reading operation of the image reading device 59 in the image forming system 1 having the above configuration will be described. As shown in FIG. 3, the lifting device 83 lifts the CIS unit 81 to the non-reading height while the image reading operation is not performed such as during the image formation. Further, since the amount of the conveyance guide 85 protruding downward from the casing 87 is small, the sheet conveyed through the double-sided conveyance path 49 does not interfere with the conveyance guide 85.

At the time of image reading, the lifting device 83 lowers the CIS unit 81 from the non-reading height to the reading height. The CIS unit 81 is lowered through the opening 87a of the casing 87. At this time, the lower surface of the CIS unit 81 (the lower surface of the glass plate 95) abuts against the distal part 119 of the conveyance guide 85. With the lowering of the CIS unit 81, the distal part 119 of the conveyance guide 85 is pushed downward. Then, the intermediate part 117 of the conveyance guide 85 is bent (elastically deformed) downward with respect to the fixed part 115 along the first fold 111. Since the slits 121 are formed in the first fold 111, the intermediate part 117 is easily bent relative to the fixed part 115.

As shown in FIG. 4, when the CIS unit 81 is lowered to the reading height, the intermediate part 117 is inclined downward from the edge of the opening 87a toward the glass plate 95 of the CIS unit 81 (guiding posture). Further, the distal part 119 is in close contact with the glass plate 95 and is substantially parallel to the glass plate 95. The image of the sheet conveyed along the double-sided conveyance path 49 is read by the two CISs 91. The reading result is transmitted to the image inspection apparatus for inspection. The sheet on which the image is formed at the time of image reading is discharged to an escape tray (not shown) so as not to be mixed with other printed matter.

Although the sheet is conveyed while being attracted to the lower guide plate 53 by the suction device 57 as described above, the leading edge of the sheet may curl upward or float away from the conveyance surface depending on the conveying state and the printing state. Even in such a case, the leading edge of the sheet is guided to the reading surface of the CIS unit 81 by the intermediate part 117 of the conveyance guide 85, so that the image can be accurately read.

When the image reading operation is completed, the lifting device 83 lifts the CIS unit 81 to the non-reading height. When the CIS unit 81 is lifted and separates from the conveyance guide 85, the conveyance guide 85 elastically returns to its original posture.

As described above, according to the disclosure of the present disclosure, since the conveyance guide 85 is displaced from the retracted posture to the guiding posture by the CIS unit 81 during the image reading, the conveyance guide 85 does not hinder the conveyance of the sheet except during the image reading, and can guide the sheet to the reading surface during the image reading. More specifically, even if the leading edge of the sheet curls upward or the sheet may float up from the conveyance surface, the leading edge of the sheet can be guided to the reading surface of the CIS unit 81 by the conveyance guide 85, so that the image can be accurately read.

In addition, since the conveyance guide 85 is retracted above the conveyance surface by a predetermined interval except for the time of image reading, it does not interfere with the sheet conveyed along the double-sided conveyance path 49. Further, since the amount of the conveyance guide 85 protruding downward from the casing 87 is small, the conveyance guide 85 hardly interferes with the conveyance surface when the image reading device 59 is attached/detached. Therefore, the deformation of the conveyance guide 85 and damage to the conveyance surface can be prevented, and the workability of attaching and detaching the image reading device 59 is improved. Further, when the image reading device 59 is placed on a work surface or the like independently, since the conveyance guide 85 does not come into contact with the work surface, the conveyance guide 85 can be prevented from being damaged or deformed.

When the CIS unit 81 is lowered to the reading height, the distal part 119 of the conveyance guide 85 comes into close contact with the glass plate 95 of the CIS unit 81 and is not close to the conveyance surface. Therefore, even during the image reading, the sheet is stably conveyed without interfering with the conveyance guide 85.

Further, since the slit 121 is formed in the first fold 111 of the conveyance guide 85, the intermediate part 117 of the conveyance guide 85 is easily bent relative to the fixed part 115 when the CIS unit 81 is lowered. Therefore, the CIS unit 81 can be lifted and lowered without resistance.

It should be noted that, at the time of image reading, the conveyance guide 85 may be pushed down by a part other than the glass plate 95 of the CIS unit 81. Further, the first fold 111 of the conveyance guide 85 may be made thinner than other parts without forming a slit.

## Claims

1. An image reading device (59) which reads an image on a sheet conveyed along a conveyance path (49), the image reding device (59) comprising:
a reading sensor (91) which optically reads the image;
a lifting device (83) which lifts and lowers the reading sensor (91) to a reading height which is close to the conveyance path (49) and at which the image can be read and a non-reading height which is separated from the conveyance path (49) more upwardly than the reading height; and
a conveyance guide (85) which is disposed above the conveyance path (49) and guides the sheet to an image reading position by the reading sensor (91), wherein
the conveyance guide (85) is pushed down by the reading sensor (91) lowered to the reading height, and is displaced from a retracted posture separated upward from the conveyance path (49) with a predetermined interval to a guiding posture closer to the conveyance path (49) than the retracted posture.

2. The image reading device (59) according to claim 1, wherein,
the conveyance guide (85) is pushed down by the reading sensor (91) lowered to the reading height, bent downward at a predetermined position, and displaced to the guiding posture, and
a slit (121) is formed at the predetermined position of the conveyance guide (85).

3. The image reading device (59) according to claim 1, comprising:
a casing (87) in which the reading sensor (91), the lifting device (83), and the conveyance guide (85) are housed, and has an opening (87a) through which the reading sensor (91) passes when the reading sensor (91) is lifted or lowered;
the conveyance guide (85) is supported by an edge of the opening (87a).

4. The image reading device (59) according to claim 3, wherein,
the conveyance guide (85) protrudes downward from a bottom surface of the casing (87) in the retracted posture, and
an amount of protrusion of the conveyance guide (85) from the bottom surface of the casing (87) is smaller than an amount of protrusion of the other components.

5. An image forming system (1) comprising:
an image forming apparatus (5) which forms an image on a sheet, and
the image reading device (59) according to claim 1, which reads the image formed by the image forming apparatus (5).
